# EUROPEAN PATENT APPLICATION

(11) **EP 4 786 943 A1**
(43) Date of publication of application: **05.08.2026**
(21) Application number: 26155546.0
(22) Date of filing: 30.01.2026
(51) Int. Cl.: G01M 7/08

(54) **COMPLIANT BROACH FIXTURE DESIGN TO SUPPORT MORE REPRESENTATIVE FAN BLADE BIRD IMPACT DESIGN**

(30) Priority: 30.01.2025 US 202519041722
(71) Applicant: RTX Corporation, Farmington, CT 06032 (US)
(72) Inventor: LI, Xuetao, South Glastonbury, 06073 (US)
(74) Representative: Dehns

(57) **Abstract**

A static impact test fixture (100) includes a load plate (104), a broach (102), and an under-root padding (106). The load plate (104) is configured to support weight of a fan blade (122) when a blade root (120) of the fan blade (122) is placed onto the load plate (104). The broach (102) includes a notch (118), a flange portion (115), and a throat opening (114). The notch (118) is configured to fit over the load plate (104) and to allow the broach (102) to slide along a first axis relative to the load plate (104). The flange portion (115) extends in a first direction over the notch (118) and is configured to overlap the load plate (104). The throat opening (114) is configured for a blade neck (124) to pass through. The under-root padding (106) is composed of a compliant material having a specified thickness and compliance that enable the under-root padding (106) to deform to an initial deformation caused by a clamping load between the load plate (104) and the broach (102).

## Description

### TECHNICAL FIELD

This disclosure relates generally to impact test systems for blades. More specifically, this disclosure relates to a compliant broach fixture design to support more representative fan blade bird impact design.

### BACKGROUND

Bird ingestion is a significant design criterion for aircraft engine fan blades, as it relates to passenger safety and resilience of the components of aircraft. To fulfill bird ingestion requirements for engine certification, which requirements can be governmental regulations, the response of aircraft components to bird impact needs to be evaluated using an intensive impacting experimental testing system.

Different types of intensive impacting experimental testing systems exist for various levels of testing performed during design progression, for example: (i) full engine bird ingestion testing (FEBIT); (ii) rotating rig impact testing (RRIT) with reduced amount of hardware; or (iii) blade component static impact test in a lab condition, etc. These testing systems support fan blade design at different testing levels. For example, the static impact test is at a lower level of testing than RRIT, which is at a lower level of testing than the FEBIT.

Bird impact testing has disadvantages when the testing system is at the FEBIT or RRIT levels because, for example, these levels of testing are timing consuming and costly. For example, a performance of the FEBIT can cost ten times (10x) more than the cost of a performance of RRIT, which can cost two hundred times (200x) more than the cost of a performance of static impact testing.

Static impact testing in a laboratory condition offers advantages that are not offered by the FEBIT and RRIT at higher levels. For example, static impact testing is performed using a reduced amount of hardware and supports quick design iterations by providing evaluations and validating design modifications. However, such a conventional static testing system in the lab has drawbacks, such as a lack of spinning field and non-realistic constraint at the blade root.

### SUMMARY

This disclosure relates to a compliant broach fixture design to support more representative fan blade bird impact design.

According to one aspect of the present invention, there is provided a static impact test fixture including a load plate, a broach, and an under-root padding. The load plate is configured to support weight of a fan blade when a blade root of the fan blade is placed onto the load plate. The broach includes a notch, a flange portion, and a throat opening. The notch is configured to fit over the load plate and to allow the broach to slide along a first axis relative to the load plate. The flange portion extends in a first direction over the notch and is configured to overlap the load plate. The throat opening is configured for a blade neck to pass through. A wall of the flange portion has a shape corresponding to a shape of the blade root. The under-root padding is disposed between the load plate and the broach in a second direction orthogonal to the first direction. The under-root padding is composed of a compliant material having a specified thickness and compliance that enable the under-root padding to deform to an initial deformation caused by a clamping load between the load plate and the broach.

According to another aspect of the present invention, there is provided a method to form a static impact test fixture including providing a load plate configured to support weight of a fan blade when a blade root of the fan blade is placed onto the load plate. The method includes providing a broach. The broach includes a notch, a flange portion, and a throat opening. The notch is configured to fit over the load plate and to allow the broach to slide along a first axis relative to the load plate. The flange portion extends in a first direction over the notch and is configured to overlap the load plate. The throat opening is configured for a blade neck to pass through. A wall of the flange portion has a shape corresponding to a shape of the blade root. The method includes providing an under-root padding disposed between the load plate and the broach in a second direction orthogonal to the first direction. The under-root padding is composed of a compliant material having a specified thickness and compliance that enable the under-root padding to deform to an initial deformation caused by a clamping load between the load plate and the broach.

Any single one or any combination of the following features may be used with the above-described embodiments.

Optionally, and in accordance with any of the above, the specified thickness and compliance enable the under-root padding to further deform to an impact-based deformation caused by motion of the blade root under a dynamic impact load. The specified thickness and compliance enable the under-root padding to rebound to the initial deformation when the blade root is no longer under the dynamic impact load.

Optionally, and in accordance with any of the above, the static impact test fixture can further include multiple bolt holes configured to receive multiple torque bolts to apply the clamping load.

Optionally, and in accordance with any of the above, the under-root padding can include multiple layers of the compliant material. The under-root padding can include first layer of a first compliant material and a second layer of a second compliant material. The first compliant material can be rubber, and the second compliant material can be foam. The under-root padding can include a third layer of a third compliant material in a spring-box structure.

Optionally, and in accordance with any of the above, the static impact test fixture can further include a throat padding. A shape of the throat padding corresponds to a shape of a local gap between the throat opening and the blade neck.

Optionally, and in accordance with any of the above, the load plate can include a pedestal configured to attach to the under-root padding, and wherein the pedestal protrudes in the second direction toward the flange portion.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawing, in which like reference numerals represent like parts:

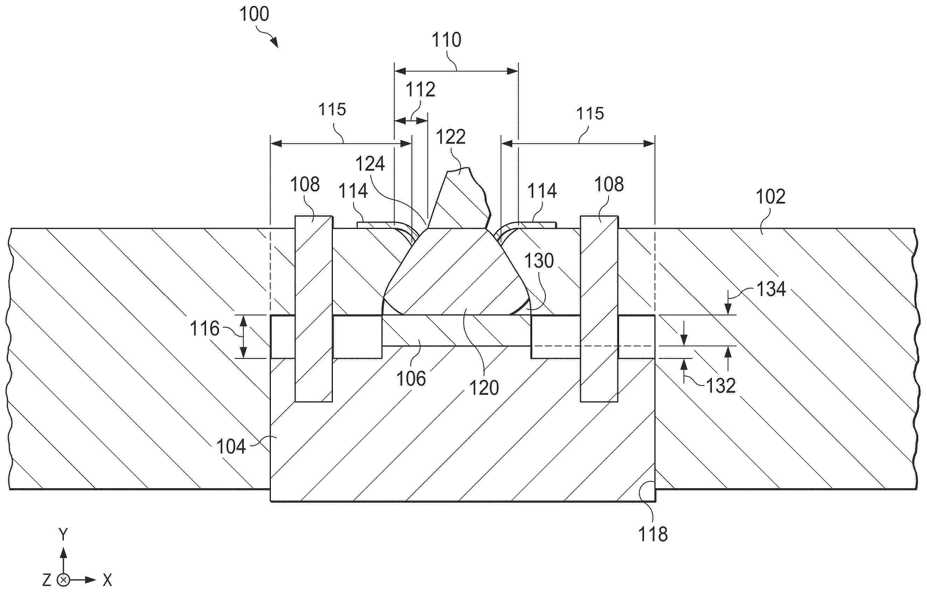

FIGURE 1 illustrates static impact test fixture according to this disclosure.

### DETAILED DESCRIPTION

FIGURE 1, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

This disclose provides a new static impact test fixture that is used for static impact testing in a laboratory condition. This new static impact test fixture offers the above-described advantages of static impact testing, including that new static impact test fixture is performed using a reduced amount of hardware supports quick design iterations by providing evaluations and validating design modifications. This new static impact test fixture provides a solution to overcome drawbacks associated with the conventional static testing system in the lab. Particularly, this new static impact test fixture prevents over-constraint at the blade root and improves the static impact test results representative of actual rotating field testing. This new static impact test fixture reduces costs and time for testing validation.

FIGURE 1 illustrates a static impact test fixture 100 according to embodiments of this disclosure. The embodiment of the fixture 100 shown in FIG. 1 is for illustration only, and other embodiments of the static impact test fixture 100 could be used without departing from the scope of this disclosure. Although only one plane (such as an x-y plane) is shown in FIGURE 1, the static impact test fixture 100 is three-dimensional, as shown by the x-axis, y-axis (longitudinal axis), and z-axis.

The static impact test fixture 100 creates a flexible boundary condition around the dovetail in a broach block system such that the performance of the flexible boundary condition is similar to the performance of engine conditions during full engine bird ingestion testing (FEBIT). The static impact test fixture 100 can be used to test and evaluate performance of various types of fan blades, such as carbon fiber composite fan blades. Analysis and preliminary testing results demonstrate that the static impact test fixture 100 can help achieve desirable blade stress and avoid rigid boundary constraint at the root of the fan blade. The static impact test fixture 100 improves static impact testing to be representative of a rotating impact condition.

The static impact test fixture 100 can be a broach block system. The static impact test fixture 100 includes a broach 102, a load plate 104, an under-root padding 106, and multiple torque bolts 108. The static impact test fixture 100 includes a throat opening 110 through which a blade root 120 of a fan blade 122 passes. More particularly, the blade neck 124 passes through the throat opening 110 when the blade root 120 is being inserted into an interior space 130 of the fixture 100. The interior space 130 is within an interior of the broach 102 and located above the load plate 104.

A bottom surface of the blade root 120 is in contact with a top surface of the under-root padding 106 when the blade root 120 is placed (inserted) inside the interior space 130 of the fixture 100. In some embodiments, the blade root 120 is moved in the +z direction to insert the blade root 120 into the interior space 130. A local gap 112 is created when the blade root 120 is installed in the interior space 130 of the fixture 100, and the local gap 112 extends from a perimeter of the throat opening 110 to the surface of the blade neck 124. The blade neck 124 is where a top end of the blade root 120 meets an upper portion of the body of the fan blade 122.

The static impact test fixture 100 can include a throat padding 114 that is a soft padding adhered to a wall of the flange portion 115 at the perimeter of the throat opening 110, for example, adhered to the surface of the broach 102 where the blade neck 124 is expected to collide (for example, in response to impact causing the blade 122 to move, rock, wiggle, or flex). The throat padding 114 can be annular around the blade neck 124, or the fixture 100 can include multiple throat paddings 114 positioned adjacent to opposite sides of the fan blade 122 (for example, left and right sides).

The static impact test fixture 100 includes multiple bolt holes into which the multiple torque bolts 108 are inserted to fasten the load plate 104 to the flange portion 115 of the broach 102. A clamping load between the load plate 104 and the broach 102 is applied when the bolts 108 are torqued into the bolt holes. The clamping load is applied to the blade root 120 and to the under-root padding 106, which are located between the load plate 104 and broach 102. As the bolts 108 are torqued deeper into the bolt holes, the clamping load increases and a spacing 116 distance decreases from a top surface of the load plate 104 to the bottom surface of the flange portion 115 of the broach 102. That is, the clamping load is adjustable according to the torque applied to the bolt holes.

The broach 102 can be formed from a rectangular block composed of metal such as steel. The broach includes a notch 118, a flange portion 115, and the throat opening 110. The throat opening 110 is configured for the blade neck 124 to pass through.

The notch 118 is configured to fit over the load plate 104 and to allow the broach 102 to the slide along a first axis (such as the y-axis) relative to the load plate 104. The notch 118 has a shape corresponding to a shape of the load plate 104. For example, the width of the notch 118 can be substantially the same as width of the load plate 104. In some embodiments, the width of the notch 118 is larger than the width of the load plate 104 by a slight width (such as space to slide).

The flange portion 115 of the broach 102 overlaps (for example, positioned above) the load plate 104, and is spaced apart from the load plate 104 by the height of the spacing 116. The flange portion 115 extends in a first direction over the notch 118, and the first direction can be a radial direction that is radially (in the x-z plane) to the center longitudinal axis of the throat opening 110. The flange portion 115 of the broach 102 can be formed from cutting and removing cutouts, such as the throat opening 110 and the notch 118, from the rectangular block. The flange portion 115 has a shape forming at least part of the interior space 130 of the fixture 100, and the shape of the flange portion 115 can be based on the shape of the blade root 120. For example, the blade root can have a dovetail shape. The shape of the flange portion 115, particularly the shape of the sidewall of the flange portion 115, includes an upper contour corresponding to the shape of the blade neck 124 when the blade root 120 moves during an event of dynamic loading. The shape of the flange portion 115 includes a lower contour corresponding to motion of the widest part of the blade root 120 that moves when the clamping load is applied or during an event of dynamic loading. The shape of the flange portion 115 includes an intermediate contour that extends between the upper contour and lower contour. This intermediate contour of the flange portion 115 corresponds to (for example, matches) the shape of the sides of blade root 120 such that opposite sides (for example, left and right sides) of the blade root 120 maintain flush contact with the intermediate contoured wall of the flange portion 115. For example, intermediate contour of the flange portion 115 can be the surface where the broach 102 applies the clamping load to the blade root 120. The contoured sidewall (including the upper, intermediate, and lower contours) of the flange portion 115 is inside the broach 102 and defines side boundaries of the interior space 130.

The block portion of the broach 102 is positioned adjacent to a side wall of the load plate 104. In some embodiments, the broach 102 can be split into identical halves that face each other and that are centered about a longitudinal axis extending in the ± y-direction through a center of the throat opening 110.

The load plate 104 can be another rectangular block composed metal such as steel. The load plate is configured to support weight of the fan blade 122 when the blade root 120 of the fan blade is placed onto the load plate 104, particularly, when the blade root 120 is placed onto the under-root padding 106 attached to the load plate 104. The load plate 104 can include a pedestal configured to attach to the under-root padding 106, and wherein the pedestal 132 protrudes in the +y direction toward the flange portion 115 of the broach 102. The height of the pedestal can allow the spacing 116 to reduce to a zero or negligible distance while the under-root padding 106 (even if fully enclosed inside the interior space 130) prevents the bottom surface of the blade root 120 from contacting the rigid surface of the load plate.

The under-root padding 106 is disposed between the load plate 104 and the broach 102 in the +y direction such that the load plate 104 is a layer below and the flange portion 115 of the broach 102 is a layer above the load plate 104 layer. Given that the under-root padding 106 partially covers the top surface of the load plate 104, the bottom boundary of the interior space 130 includes the top surface of the under-root padding 106 and can additionally portions of the top surface of the load plate 104 that are not covered by the under-root padding 106.The under-root padding 106 can be composed of a compliant material having a specified thickness and compliance that enable the under-root padding 106 to deform to an initial deformation caused by a clamping load applied between the load plate 104 and the broach 102. The specified thickness and compliance enable the under-root padding to further deform (from the initial deformation) to an impact-based deformation caused by motion of the blade root under a dynamic impact load. The specified thickness and compliance enable the under-root padding to rebound (from the impact-based deformation) to the initial deformation when the blade root is no longer under the dynamic impact load.

In some embodiments, the under-root padding 106 is a single layer of a single compliant material. Rubber is an example of the compliant material. During tests, rubber material did not exhibit permanent deformation, as such rubber is able to rebound from impact-based deformation to initial deformation. Rubber has a desirable compliance, which is stiffness or hardness. In some cases, depending upon specified thickness, the compliance of rubber enables a layer or rubber to rebound to a non-deformed state, which can be identical to or substantially the same as a (brand new, not yet used) pre-deformation state of the under-root padding 106. Crushable foam or sandwich-structure composite material is another example of the compliant material. During tests, crushable foam was unable to rebound 100% from deformations to a non-deformed state. Spring-box structure is another example of the compliant material that is designed to have a desired stiffness.

In some other embodiments, the under-root padding 106 includes multiple layers of compliant material. A layer of under-root padding can be a uniformly flat pad. For example, each of the multiple layers can include the same compliant material. As another example, the multiple layers of the under-root padding 106 can include a first layer of a first compliant material, a second layer of a second compliant material, and a third layer of a third compliant material. As an example, the first compliant material includes (or can be) rubber, the second compliant material includes foam, and the third compliant material includes a spring-box structure. A mattress is an example of a spring-box structure. As another example, multiple layers of different compliant materials can include a first layer of rubber on top of a second layer composed of a spring-box structure, wherein the bottom surface of the blade root 120 contacts the rubber first layer that is less susceptible to permanent deformation (i.e., failure to rebound), and the second layer is beneath the first layer.

As a technical advantage, the multiple layers of the compliant material(s) enable the under-root padding 106 have an adjustable thickness and adjustable compliance. As another technical advantage, the multiple layers of the compliant material(s) enable a failed layer of compliant material to be replaced without replacing the entire under-root padding 106 or without replacing other layers that did not experience a failure. A layer of compliant material fails when the performance of compliant material exhibits any one of the following: (i) failure to deform from a non-deformed state (having thickness t0) to an (having thickness t1 that is less than t0) when a clamping load is applied; (ii) failure to deform from the initial deformation to an impact-based deformation (having a thickness t2 that is less than t1) during an event of dynamic loading that occurs while the blade 122 is under a dynamic impact load; or (iii) failure to rebound to thickness t1 of the initial deformation when the blade root is no longer under the dynamic impact load. The ability to rebound allows the under-root padding 106 to perform a longer dynamic loading (i.e. blade motion) response period, which is the period of the event of dynamic loading.

The geometry of the under-root padding 106 enables the padding 106 to attach to the pedestal 132. For example, a graduated width enables the padding 106 to fit inside the interior space 130 when deformed under the clamping and/or dynamic impact loads. The specified thickness 134 of the under-root padding 106 allow sufficient movement of blade root 120 under a clamping load that represents operational forces that will be applied to the blade root 120 when the fan blade 122 is rotating/spinning after being installed in an aircraft engine. The specified thickness 134 of the under-root padding 106, including each specified thickness of each layer of a multi-layered under-root padding 106, is calculatable using analytics tool.

During operation of the aircraft engine, rotation of the fan blade 122 might force the bottom of the blade root 120 to move or wiggle radially outward to separate from a surface of the hub, thereby creating boat-shaped space contoured according to the boat-shaped bottom of the blade root 120. When the aircraft engine is not operating, there is no spin of the fan blade 122, thereby allowing the boat-shaped bottom of the blade root 120 move radially inward to return to contacting the surface of the hub (for example, at a surface of a boat-shaped notch cutout of the hub). The clamping load simulates these operational forces that move the blade root 120 radially inward and outward based on the OFF and ON states of the aircraft engine.

During operation of the aircraft engine, the blade neck 124 is subjected to large amounts of stress, and as a result, stress measurements of the blade neck 124 are measured and evaluated during impact testing of blades. Impact from a bird strike is one type of dynamic impact load that is applied to a fan blade 122 during operation. During static impact testing in a laboratory, a projectile (such as a bird, or replica of a bird) is launched to impact the fan blade 122 while the blade root 120 is under the clamping load applied by the broach and loading plate 104. An event of dynamic loading beings when the projectile impacts the fan blade 122, and continues until the fan blade 122 returns to steady state. During the event of dynamic loading, the projectile may force the blade neck 124 to bend back and forth relative to the throat opening 110, and may contact the upper contoured surfaces of the flange portions 115 of the broach 102. During the event of dynamic loading, the projectile may force the blade root 120 to move three-dimensionally inside of the interior space 130, which in response can dynamically change the thickness 134 of the under-root padding 106.

The throat opening 110 (also referred to as a broach throat) has a sufficient width of the opening and/or soft padding to avoid rigid contact at neck of root. The throat padding 114 can be a soft padding inserted into the throat opening 110 to avoid rigid contact of the neck 124 of the blade root 120 colliding into the surface of the broach 102. A shape of the throat padding 114 corresponds to a shape of a local gap 112 such that the throat padding 114 extends from a surface of the throat opening 110 to the blade neck 124 to fill the local gap 112.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A static impact test fixture (100) comprising:
a load plate (104) configured to support weight of a fan blade (122) when a blade root (120) of the fan blade (122) is placed onto the load plate (104);
a broach (102) that includes:
a notch (118) configured to fit over the load plate (104) and to allow the broach (102) to slide along a first axis relative to the load plate (104),
a flange portion (115) that extends in a first direction over the notch (118) and that is configured to overlap the load plate (104); and
a throat opening (110) configured for a blade neck (124) to pass through, wherein a wall of the flange portion (115) has a shape corresponding to a shape of the blade root (120); and
an under-root padding (106) disposed between the load plate (104) and the broach (102) in a second direction orthogonal to the first direction, and composed of a compliant material having a specified thickness and compliance that enable the under-root padding (106) to deform to an initial deformation caused by a clamping load between the load plate (104) and the broach (102).

2. The static impact test fixture (100) of claim 1, wherein the specified thickness and compliance enable the under-root padding (106) to:
further deform to an impact-based deformation caused by motion of the blade root (120) under a dynamic impact load; and
rebound to the initial deformation when the blade root (120) is no longer under the dynamic impact load.

3. The static impact test fixture (100) of claim 1 or 2, further comprising multiple bolt holes configured to receive multiple torque bolts (108) to apply the clamping load.

4. The static impact test fixture (100) of any preceding claim, further comprising a throat padding (114).

5. The static impact test fixture (100) of claim 4, wherein a shape of the throat padding (114) corresponds to a shape of a local gap (112) between the throat opening (110) and the blade neck (124).

6. A method of forming a static impact test fixture (100), the method comprising:
providing a load plate (104) configured to support weight of a fan blade (122) when a blade root (120) of the fan blade (122) is placed onto the load plate (104);
providing a broach (102) that includes:
a notch (118) configured to fit over the load plate (104) and to allow the broach (102) to slide along a first axis relative to the load plate (104),
a flange portion (115) that extends in a first direction over the notch (118) and that is configured to overlap the load plate (104), and
a throat opening (110) configured for a blade neck (124) to pass through, wherein a wall of the flange portion (115) has a shape corresponding to a shape of the blade root (120); and
providing an under-root padding (106) disposed between the load plate (104) and the broach (102) in a second direction orthogonal to the first direction, and composed of a compliant material having a specified thickness and compliance that enable the under-root padding (106) to deform to an initial deformation caused by a clamping load between the load plate (104) and the broach (102).

7. The method of claim 6, further comprising determining the specified thickness and compliance that enable the under-root padding (106) to:
further deform to an impact-based deformation caused by motion of the blade root (120) under a dynamic impact load; and
rebound to the initial deformation when the blade root (120) is no longer under the dynamic impact load.

8. The method of claim 6 or 7, further comprising providing multiple bolt holes configured to receive multiple torque bolts (108) to apply the clamping load.

9. The method of any of claims 6 to 8, further comprising providing a throat padding (114).

10. The method of claim 9, wherein a shape of the throat padding (114) corresponds to a shape of a local gap (112) between the throat opening (110) and the blade neck (124).

11. The static impact test fixture (100) or method of any preceding claim, wherein the under-root padding comprises multiple layers of the compliant material.

12. The static impact test fixture (100) or method of any preceding claim, wherein the under-root padding (106) comprises a first layer of a first compliant material and a second layer of a second compliant material.

13. The static impact test fixture (100) or method of claim 12, wherein the first compliant material includes rubber, and the second compliant material includes foam.

14. The static impact test fixture (100) or method of any preceding claim, wherein the under-root padding (106) comprises a third layer of a third compliant material in a spring-box structure.

15. The static impact test fixture (100) or method of any preceding claim, wherein the load plate (104) comprises a pedestal (132) configured to attach to the under-root padding (106), and the pedestal (132) protrudes in the second direction toward the flange portion (115).
